(19) Europäisches Patentamt
European Patent Office
Office européen des brevets

(11) EP 0 466 279 B1

(12) EUROPEAN PATENT SPECIFICATION

(45) Date of publication and mention of the grant of the patent: **28.08.1996 Bulletin 1996/35**

(51) Int Cl.[6]: **C08F 210/02**, C08F 232/08, C08F 255/02, C08F 277/00

(21) Application number: **91202054.2**

(22) Date of filing: **23.05.1986**

# (54) Random copolymer and process for production thereof

Statistisches Mischpolymer und Verfahren zur Herstellung derselben

Copolymère statistique et procédé pour sa production

(84) Designated Contracting States:
**DE FR GB IT NL**

(30) Priority: **24.05.1985 JP 110545/85**
**28.05.1985 JP 113074/85**
**30.07.1985 JP 166895/85**
**26.04.1986 JP 95905/86**
**26.04.1986 JP 95906/86**

(43) Date of publication of application:
**15.01.1992 Bulletin 1992/03**

(62) Application number of earlier application in accordance with Art. 76 EPC: **86303969.9**

(73) Proprietor: **MITSUI PETROCHEMICAL INDUSTRIES, LTD.**
**Tokyo (JP)**

(72) Inventors:
- **Minami, Syuji**
  **Ohtake-shi, Hiroshima-ken (JP)**
- **Kajiura, Hirokazu c/o Mitsui Petrochemical**
  **Sodegaura-shi, Ciba-ken (JP)**
- **Oda, Hidekuni c/o Mitsui Petrochemical Ind.,Ltd.**
  **Chiba-ken (JP)**
- **Yamaguchi, Hideaki**
  **c/o Mitsui Petrochemical Ind.,**
  **Kuga-Gun, Yamaguchi-ken (JP)**

(74) Representative: **Cresswell, Thomas Anthony et al**
**J.A. KEMP & CO.**
**14 South Square**
**Gray's Inn**
**London WC1R 5LX (GB)**

(56) References cited:
**EP-A- 0 156 464**
**DE-A- 2 421 838**
**GB-A- 1 520 053**
**US-A- 3 478 002**
**US-A- 3 494 897**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 466 279 B1

## Description

This invention relates to a novel random copolymer comprising at least polymerized units from ethylene and polymerized units from a cycloolefin as monomers, and a process for production thereof. More specifically, it relates to a cycloolefin type random copolymer having excellent transparency, thermal resistance, heat aging resistance, chemical resistance, solvent resistance, dielectric properties and mechanical properties and a narrow molecular weight distribution.

Polycarbonate, poly(methyl methacrylate) and poly(ethylene terephthalate) are known as synthetic resins having excellent transparency. The polycarbonate resin has excellent heat resistance, heat aging resistance and impact strength as well as excellent transparency, but have the defect of poor chemical resistance since it is readily attacked by strong alkalis. Poly(methyl methacrylate) has the defect that it is susceptible to attack by ethyl acetate, acetone and toluene, is swollen in ether, and has low heat resistance. Polyethylene terephthalate has excellent heat resistance and mechanical properties but has the defect of possessing weak resistance to strong acids or alkalis and of being susceptible to hydrolysis.

Many polyolefins well known as general-purpose resins have excellent chemical resistance, solvent resistance and mechanical properties, but have poor heat resistance. Furthermore, they have poor transparency because they are crystalline. The transparency of polyolefins is generally improved by adding a nucleating agent to render the crystal structure fine, or by performing quenching to stop the growth of crystals, but such measures have not proved to be entirely effective. Rather, the addition of a third component such as the nucleating agent is likely to impair the inherent excellent properties of the polyolefins. Furthermore, the quenching method requires large scale equipment, and is also likely to reduce heat resistance or rigidity with a decrease in crystallinity.

On the other hand, methods have been proposed for producing polymers having superior transparency by copolymerizing ethylene with bulky comonomers. U. S. Patent 2,883,372 discloses a copolymer of ethylene with 2,3-dihydrodicyclopentadiene. This copolymer has a well balanced combination of rigidity and transparency but low heat resistance as shown by its glass transition temperature of about 100°C.

Japanese Patent Publication No. 14,910/1971 discloses a process for producing a homo- or co-polymer having polymerized units represented by the following formula (a)

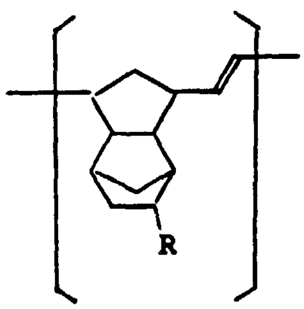

--- (a)

wherein R is hydrogen or a lower alkyl group, which comprises polymerizing a 1,4,5,8-dimethano-1,2,3,4,4a,5,8,8a-octahydronaphthalene represented by the following formula (b)

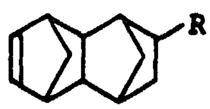

--- (b)

wherein R is as defined above, alone or with a cyclic olefin selected from styrene, acenaphthylene, bicyclo-[2.2.1]heptene-2, alkyl-substituted products of the heptene and cyclopentene in the presence of an alcohol as a reducing agent using a halide of a noble metal such as ruthenium as a catalyst.

Homo- or co-polymers comprising the 1,4,5,8-dimethano-1,2,3,4,4a,5,8,8a-octahydronaphthalene as part or the whole of monomers and methods for production thereof are also disclosed in Japanese Laid-Open Patent Publications Nos. 159,598/1975, 127,728/1983, 51,911/1984, 81,315/1984 and 81,316/1984 and U. S. Patent 4,178,424.

The polymers disclosed in these prior art documents are ring-opened polymers having polymerized units resulting from ring-opening of monomers as in the polymerized units represented by formula (a). As can be understood from formula (a), these ring-opened polymers are structurally characterized by the fact that the main polymer chain contains an unsaturated vinyl linkage. Because of the presence of the unsaturated vinyl linkage, these polymers have poor heat aging resistance.

All of the polymers described in the above prior art documents are ring-opened polymers obtained by the ring scission of a monomer. U. S. Patents 3,330,815 and 3,494,897 and Journal of Polymer Science: Polymer Physics Edition, volume 12, 1607-1618 (1974) describe polymers of the type obtained by the opening of the double bond of

monomer without the ring scission of the bicyclohept-2-ene skeleton of the monomer.

U. S. Patent 3,330,815 discloses that a polymer comprising polymerized units of the following formula (c)

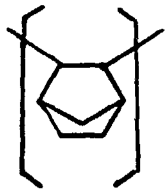

--- (c)

or the substitution product thereof is obtained from bicyclo[2.2.1]hept-2-ene of the following formula (d)

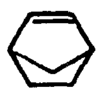

--- (d)

or its substitution product.

U. S. Patent 3,494,897 discloses a process for producing a copolymer of ethylene with a bicyclo[2.2.1]-hept-2-ene represented by the following formula (e)

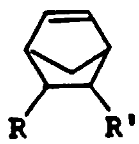

--- (e)

Example 44 and claim 92 of this patent discloses a co-polymer of ethylene with tetracyclo[6,2,1,$1^{3,6}$,$0^{2,7}$]-4-dodecene of the following formula (f) encompassed within the formula (e)

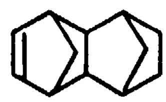

--- (f)

and ethylene. The Patent does not describe the content of the tetracyclododecene of the copolymer of Example 44. When it is calculated under the assumption that all of the tetracyclododecene charged was introduced into the polymer, the polymer contains polymerized units derived from about 2 mole% at most of the tetracyclododecene. U. S. Patent 3,494,897 does not at all describe specifically copolymers of ethylene with tetracyclododecenes other than the tetracyclo[6,2,1,$1^{3,6}$,$0^{2,7}$]-4-dodecene of formula (f).

Journal of Polymer Science: Polymer Physics Edition, volume 12, 1607-1618 (1974) discloses copolymers of ethylene and norbornene derivatives having dynamic mechanical properties. Table II of this document shows a copolymer of ethylene containing 1 mole% of polymerized units derived from the same compound as formula (f) (named octahydrodimethanonaphthalene in this document). Table IV thereof states that this copolymer has a beta-relaxation temperature of 15°C.

The copolymers described in these prior art references which contain only 2% at the most of octahydrodimethanonaphthalene have a glass transition temperature of about 15°C at the highest. They strongly exhibit a rubbery nature and have poor heat resistance and mechanical properties.

U. S. Patent Application Serial No. 696,161 (European Laid-Open Patent Application No. 0156464) discloses a random copolymer composed of ethylene, a 1,4,5,8-dimethano-1,2,3,4,4a,5,8,8a-octahydronaphthalene and optionally an alpha-olefin having at least 3 carbon atoms or a cycloolefin, wherein the mole ratio of polymerized units from the 1,4,5,8-dimethano-1,2,3,4,4a,5,8,8a-octahydronaphthalene to polymerized units from ethylene is from 3:97 to 95:5 and the 1,4,5,8-dimethano-1,2,3,4,4a,5,8,8a-octahydronaphthalene is incorporated in the polymer chain as polymerized units without ring-opening.

The specification of U. S. Patent No. 2,883,372 discloses a normally solid copolymer of ethylene and 2,3-dihydrodicyclopentadiene having the following formula

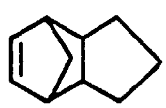

said copolymer having a density in the range of 0.96 to 1.02 and being capable of being compression-molded at elevated temperatures into tough films.

US-A-3,478,002 describes sulfur-curable terpolymers of a norbornene, ethylene and a $C_{3\text{-}20}$ $\alpha$-olefin obtainable by batch copolymerization.

US-A-4,195,013 describes an elastome of the ethylene-α-olefin-nonconjugated diene tetrapolymer type containing a sterically hindered unhalogenated mono-olefin monomer for use in vehicle types.

The present invention seeks to provide a copolymer having excellent transparency, thermal resistance, heat aging resistance, chemical resistance, solvent resistance, dielectric properties and mechanical properties.

Accordingly the present invention provides a random copolymer characterized in that

(A) the copolymer comprises polymerized units of ethylene and polymerized units of at least one cycloolefin represented by the following formula (I)

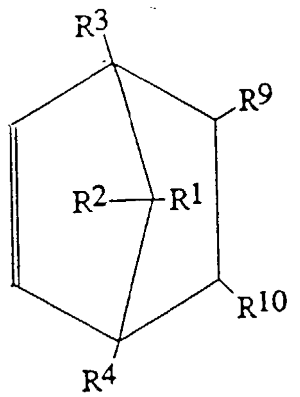

(I)

wherein $R^1$, $R^2$, $R^3$ and $R^4$ are identical or different and each represents a hydrogen atom, halogen atom or a hydrocarbon group having 1 to 10 carbon atoms, and $R^9$ and $R^{10}$ are identical or different and each represents a hydrogen atom, a halogen atom or a hydrocarbon group having 1 to 10 carbon atoms or $R^9$ and $R^{10}$ are bonded to each other to form a group of the following formula

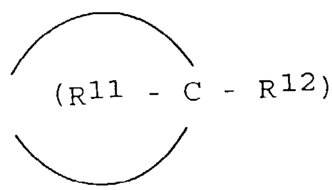

in which $R^{11}$ and $R^{12}$ are identical or different and each represents a hydrogen atom, a halogen atom or a hydrocarbon group having 1 to 10 carbon atoms, and $\ell$ is an integer of 3 or 4,

(B) the mole ratio of the polymerized cycloolefin units to the polymerized ethylene units is from 3:97 to 60:40,

(C) the or each cycloolefin of formula (I) is incorporated in the polymer chain as polymerized units represented by the following formula (II)

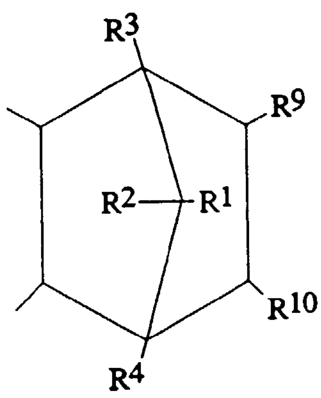

(II)

wherein all symbols are as defined above,

(D) the copolymer has an intrinsic viscosity [η], measured in decalin at 135°C, of 0.01 to 20 dl/g,

(E) the copolymer has a molecular weight distribution ($\bar{M}w/\bar{M}n$), measured by gel permeation chromatography, of not more than 4, and

(F) the copolymer has a crystallinity, measured by X-ray diffractometry, of 0 to 10%.

The present invention also provides a process for producing a random copolymer as defined above, which process

comprises continuously copolymerizing ethylene with the or each cycloolefin represented by formula (I) in a hydrocarbon medium in the presence of a catalyst formed from a vanadium compound soluble in the hydrocarbon medium and an organoaluminum compound while maintaining the atomic ratio of aluminum atoms to vanadium atoms in the reaction system, Al:V, at 2 or more:1.

The present invention additionally provides a process for preparing a modified random copolymer, which process comprises grafting on to a random copolymer, as defined above, 0.1 to 50 parts by weight of a monomer selected from (a) alpha, beta-unsaturated carboxylic acids and/or their derivatives, (b) styrenes, (c) organic silicon compounds having an olefinically unsaturated bond and a hydrolyzable group, and (d) unsaturated epoxy monomers per 100 parts by weight of the said random copolymer.

The present invention further provides molded articles prepared from a random copolymer as defined above or from a modified random copolymer prepared by a process as defined above.

The present invention also provides a modified random copolymer which is obtainable by a process as defined above.

In formula (I), $R^1$, $R^2$, $R^3$ and $R^4$ are identical or different, and each represents a hydrogen atom, a halogen atom or a hydrocarbon group having 1 to 10 carbon atoms. The halogen atom is, for example, fluorine, chlorine or bromine. The hydrocarbon group is preferably an alkyl group. Preferably the alkyl group has 1 to 5 carbon atoms. The alkyl group may be linear or branched, and include, for example, methyl, ethyl, n-propyl, iso-propyl, n-butyl, iso-butyl, sec-butyl, t-butyl, pentyl, hexyl, heptyl, octyl, nonyl and decyl.

Examples of the halogen atom and the hydrocarbon group represented by $R^9$ and $R^{10}$ are the same as those given above.

Examples of the cycloolefin of formula (I) include

bicyclo[2,2,1]hept-2-ene,
6-methylbicyclo[2,2,1]hept-2-ene,
5,6-dimethylbicyclo[2,2,1]hept-2-ene,
1-methylbicyclo[2,2,1]hept-2-ene,
6-ethylbicyclo[2,2,1]hept-2-ene,
6-n-butylbicyclo[2,2,1]hept-2-ene,
6-i-butylbicyclo[2,2,1]hept-2-ene,
7-methylbicyclo[2,2,1]hept-2-ene,
tricyclo[4,3,0,$1^{2,5}$]-3-decene,
2-methyl-tricyclo[4,3,0,$1^{2,5}$]-3-decene,
5-methyltricyclo[4,3,0,$1^{2,5}$]-3-decene,
tricyclo[4,4,o,$1^{2,5}$]-3-decene,
10-methyltricyclo[4,4,0,$1^{2,5}$]-3-decene.

The compounds of formula (I) may be used singly or in combination.

The compounds of formula (I) can be easily produced by condensing cyclopentadienes with the corresponding olefins by the Diels-Alder reaction.

According to the process of this invention, the cycloolefin of formula (I) is copolymerized continuously with ethylene in a hydrocarbon medium in the presence of a catalyst. The catalyst is one formed from a soluble vanadium compound and an organoaluminum compound. In the copolymerization reaction carried out continuously, the atomic ratio of aluminum atoms to vanadium atoms, Al:V, is maintained at at least 2:1.

The soluble vanadium compound used in the process of this invention as a component of the catalyst is a vanadium compound soluble in the hydrocarbon medium in the polymerization reaction system. It may include vanadium compounds of formula $VO(OR)_aX_b$ or $V(OR)_cX_d$ wherein R is a hydrocarbon group such as an aliphatic, alicyclic or aromatic hydrocarbon group having 1 to 20 carbon atoms, preferably an aliphatic hydrocarbon group having 1 to 5 carbon atoms, especially 1 to 3 carbon atoms, $0 \leqq a \leqq 3$, $0 \leqq b \leqq 3$, $2 \leqq a+b \leqq 3$, $0 \leqq c \leqq 4$, $0 \leqq d \leqq 4$, $3 \leqq c+d \leqq 4$, and X is halogen such as Cl, Br or I and adducts of these compounds with electron donors. Specific examples are $VOCl_3$, $VO(OCH_3)Cl_2$, $VO(OCH_3)_3$, $VO(OC_2H_5)_{1.5}Cl_{1.5}$, $VO(OC_2H_5)Cl_2$, $VO(OC_2H_5)_2Cl$, VO(O-iso-$C_3H_7$)$Cl_2$, VO(O-iso-$C_3H_7$)$_2$Cl, VO(O-iso-$C_3H_7$)$_{1.5}Cl_{1.5}$, VO(O-n-$C_3H_7$)$_{1.5}Cl_{1.5}$, VO(O-n-$C_3H_7$)$Cl_2$, VO(O-n-$C_3H_7$)Cl, VO(O-$C_5H_{11}$)$_{1.5}Cl_{1.5}$, VO(O-n-$C_4H_9$)$Cl_2$, VO(O-n-$C_4H_9$)$_2$Cl, VO(O-iso-$C_4H_9$)$_2$Cl, VO(O-sec-$C_4H_9$)$_3$, $VO(OC_2H_5)_3$, $VOBr_2$, $VCl_4$, $VOCl_2$, $VCl_3$, $VBr_4$, $VBr_3$, VO(O-n-$C_4H_9$)$_3$, and $VCl_3$-20$C_8H_{17}$OH.

Compounds having at least one Al-C bond in the molecule can be used as the organoaluminum compound used as a catalyst component. Examples are

(i) organoaluminum compounds of formula

$$R^{13}_{m}Al(OR^{14})_{t}H_{p}X_{q}$$

wherein $R^{13}$ and $R^{14}$ are identical or different and each represents a hydrocarbon group having 1 to 15 carbon atoms, preferably 1 to 4 carbon atoms, X represents a halogen atom such as Cl, Br or I, m is a number represented by $0 \leqq m \leqq 3$, t is a number represented by $0 \leqq t < 3$, p is a number represented by $0 \leqq t < 3$, and q is a number represented by $0 \leqq q < 3$, provided that $m+t+p+q=3$.

(ii) Complex alkylated compounds of metals of Group I of the periodic table and aluminum of formula

$$M^{1}AlR^{15}_{4}$$

wherein $M^1$ is Li, Na or K, and $R^{15}$ is as defined above.

Examples of the organoaluminum compounds (i) are compounds of formula

$$R^{13}_{m}Al(OR^{14})_{3-m}$$

wherein $R^{13}$ and $R^{14}$ are as defined above and m is preferably a number represented by $1.5 \leqq m \leqq 3$, compounds of formula

$$R^{13}_{m}AlX_{3-m}$$

wherein $R^{13}$ is as defined above, X is halogen such as Cl, Br or I, and m is preferably $0 < m < 3$, compounds of formula

$$R^{13}_{m}AlH_{3-m}$$

wherein $R^{13}$ is as defined above and m is preferably a number represented by $2 \leqq m < 3$, and compounds of formula

$$R^{13}_{m}Al(OR^{14})_{n}X_{q}$$

wherein $R^{13}$ and $R^{14}$ are as defined above, X is halogen such as Cl, Br or I, $0 < m \leqq 3$, and $0 \leqq q < 3$, provided that $m+n+q=3$.

Examples of the aluminum compounds (i) include trialkyl aluminums such as triethyl aluminum, triisopropyl aluminum and tributyl aluminum; dialkyl aluminum alkoxides such as diethyl aluminum ethoxide and dibutyl aluminum butoxide; alkyl aluminum sesquialkoxides such as ethyl aluminum sesquiethoxide and butyl aluminum sesquibutoxide; partially alkoxylated alkyl aluminums having the average composition of $R^{1}_{0.5}Al\ (OR^{2})_{0.5}$; partially halogenated alkyl aluminums, for example dialkyl aluminum halides such as diethyl aluminum chloride, dibutyl aluminum chloride and diethyl aluminum bromide, alkyl aluminum sesquihalides such as ethyl aluminum sesquichloride, butyl aluminum sesquichloride and ethyl aluminum sesquibromide, and alkyl aluminum dihalides such as ethyl aluminum dichloride, propyl aluminum dichloride and butyl aluminum dibromide; partially hydrogenated alkyl aluminums, for example dialkyl aluminum hydrides such as diethyl aluminum hydride and dibutyl aluminum hydride, and alkyl aluminum dihydrides such as ethyl aluminum dihydride and propyl aluminium dihydride; and partially alkoxylated and halogenated alkyl aluminums such as ethyl aluminum ethoxychloride, butyl aluminum butoxychloride and ethyl aluminum aluminum ethoxybromide. As compounds similar to (i), organoaluminum compounds having at least two aluminums bonded through an oxygen or nitrogen atom may also be used. Examples of such compounds are $(C_2H_5)_2AlOAl(C_2H_5)_2$, $(C_4H_9)_2AlOAl(C_4H_9)_2$, and $(C_2H_5)_2AlNAl(C_2H_5)_2$.

Examples of the compounds (ii) are $LiAl(C_2H_5)_4$ and $LiAl(C_7H_{15})_4$.

Among these, the alkyl aluminum halides, alkyl aluminum dihalides and mixtures of these are especially preferred.

The copolymerization reaction in accordance with the process of this invention is carried out in a hydrocarbon medium. Examples of the solvent include aliphatic hydrocarbons having 5 to 15 carbon atoms such as pentane, hexane, heptane, octane and kerosene; alicyclic hydrocarbons having 5 to 15 carbon atoms such as cyclopentane, cyclohexane and methylcyclohexane; and aromatic hydrocarbons having 6 to 15 carbon atoms such as benzene, toluene and xylene. These solvents may be used singly or in combination.

In the process of this invention, the copolymerization reaction is carried out continuously. During the reaction, the ratio of aluminum atoms to vanadium atoms, Al/V, is maintained at 2 or more:1, preferably 2 to 50:1, especially preferably 3 to 20:1.

The soluble vanadium compound and the organoaluminum compound are fed to the reaction system usually after dilution with the hydrocarbon medium. The concentration of the vanadium compound to be fed to the polymerization reaction system is usually not more than 10 times, preferably 7 to 1 times, more preferably 5 to 1 times, that in the polymerization reaction system. On the other hand, the organoaluminum compound may be fed to the polymerization system after its concentration is adjusted to not more than 50 times that in the polymerization system. In the process of this invention, the concentration of the soluble vanadium compound in the copolymerization reaction system is usually 0.01 to 5 gram-atoms/liter, preferably 0.05 to 3 gram-atoms/liter, as vanadium atoms. In the process of this

invention for producing the cycloolefin random copolymer, the copolymerization reaction may be carried out in the copresence of an electron donor in the polymerization reaction system in addition to the soluble vanadium compound and the organoaluminum compound as catalyst ingredients. Examples of the electron donor include oxygen-containing electron donors such as alcohols, phenols, ketones, aldehydes, carboxylic acids, esters of organoc acids or inorganic acids, ethers, acid amides, acid anhydrides and alkoxysilanes, and nitrogen-containing electron donors such as ammonia, amines, nitriles and isocyanates. The copolymerization reaction is carried out usually at -50 to 100°C, preferably -30 to 80°C, more preferably -20 to 60°C. The average residence time in the copolymerization reaction differs depending upon the type of the polymerization material, the concentrations of the catalyst components, and the polymerization temperature. Usually it is 5 minutes to 5 hours, preferably 10 minutes to 3 hours. The pressure during the copolymerization reaction is usually more than 0 to 50 $kg/cm^2$, preferably more than 0 to 20 $kg/cm^2$. If desired, it is carried out in the presence of an inert gas such as nitrogen or argon. To control the molecular weight of the copolymer, a molecular weight controlling agent such as hydrogen may be present in the reaction system. The polymerization reaction mixture after the copolymerization is treated in accordance with conventional methods to give the desired cycloolefin random copolymer.

The mole ratio of ethylene:cycloolefin fed to the copolymerization reaction system in the process of this invention is usually from 99:1 to 1:99, preferably 98:2 to 2:98.

In this invention, the cycloolefin is copolymerized with ethylene. As required, another copolymerized unsaturated monomer within a range which does not impair the objects of the invention, for example in an amount of 50 mole%, preferably 40 mole%, based on the ethylene units in the copolymer may be copolymerized in addition to these two essential components. Specific examples of the other copolymerizable unsaturated monomer include alpha-olefins having 3 to 20 carbon atoms such as propylene, 1-butene, 4-methyl-1-pentene, 1-hexene, 1-octene, 1-decene, 1-dodecene, 1-tetradecene, 1-tetradecene, 1-hexadecene, 1-octadecene and 1-eicosane which are to be used in an amount of less than 1 mole per mole of the ethylene units in the resulting random copolymer; and cycloolefins such as cyclopentene, cyclohexene, 3-methylcyclohexene, cyclooctene, 3a,5,6,7a-tetrahydro-4,7-methano-1H-indene non-conjugated dienes such as 1,4-hexadiene, 4-methyl-1,4-hexadiene, 5-methyl-1,4-hexadiene, 1,7-octadiene, dicyclopentadiene, 5-ethylidene-2-norbornene and 5-vinyl-2-norbornene, and norbornenes such as norbornene-2, 5-methylnorbornene-2, 5-ethylnorbornene-2, 5-isopropylnorbornene-2, 5-n-butylnorbornene-2, 5-i-butylnorbornene-2, 5,6-dimethylnorbornene-2, 5-chloronorbornene-2, 2-fluoronorbornene-2, and 5,6-dichloronorbornene-2.

The copolymerization reaction in accordance with this invention can be advantageously carried out by continuously feeding ethylene, the cycloolefin, and optionally the other copolymerizable component as materials to be polymerized, the soluble vanadium compound and organoaluminum compound as catalyst components, and the hydrocarbon medium into the polymerization system, and continuously withdrawing the polymerization reaction mixture from the polymerization reaction system.

According to the continuous process of this invention, a random copolymer having a narrow molecular weight distribution and good transparency can be produced.

The resulting copolymer solution continuously withdrawn from the polymerization reaction system is a hydrocarbon medium solution of the random copolymer. The concentration of the random copolymer in the resulting copolymer solution is usually 2.0 to 20.0% by weight, preferably 2.0 to 10.0% by weight. Contacting the resulting copolymer solution with a ketone or alcohol gives a precipitate of the random copolymer. The precipitate is separated by such separating means as filtration or centrifugal separation to give the random copolymer of this invention. The proportion of the ketone or alcohol used is usually 200 to 1,000 parts by weight, preferably 300 to 500 parts by weight, per 100 parts by weight of the resulting copolymer solution. Examples of the ketones are those having 3 to 7 carbon atoms such as acetone, methyl ethyl ketone, diethyl ketone, methyl isobutyl ketone, dipropyl ketone and acetylacetone. Examples of the alcohols are alcohols having 1 to 4 carbon atoms such as methanol, ethanol, propanol, isopropanol, butanol, sec-butanol and tert-butanol. The ketones or alcohols may contain a small amount of water. The use of a mixture of the ketone or alcohol with usually 0.1 to 10% by weight, preferably 1 to 5% by weight, of water is suitable since it gives a copolymer powder having low contents of the unreacted cycloolefin monomer and a low-molecular-weight polymer and high bulk density. Contacting of the resulting copolymer solution with the ketone or alcohol is carried out with stirring at a temperature of usually 0 to 100ºC, preferably 10 to 70ºC, especially preferably at a temperature near the boiling point of the ketone or alcohol. This is effected by using a vessel-type mixer having agitating vanes such as turbine blades and comb blades. The rotating speed of the blades is usually 200 to 2,000 rpm, preferably 800 to 1,500 rpm.

As a result of the after-treatment described above, the random copolymer is precipitated usually in powder form to form a suspension. The suspension containing the copolymer is separated into the copolymer and the mother liquor by such a separating means as centrifugation or filtration. The separated copolymer is further extracted with a ketone to give a random copolymer having low contents of the unreacted cycloolefin monomer and a low-molecular-weight polymer, a narrow molecular weight distribution, a narrow composition distribution, and a high glass transition temperature. The proportion of the ketone used in the extraction is such that the concentration of the copolymer in the ketone

is usually 10 to 100 g/liter, preferably 30 to 60 g/liter. The temperature at which the copolymer is contacted with the ketone is usually 10 to 85°C, preferably 15 to 80°C. The contacting treatment between the copolymer and the ketone is usually carried out with stirring using, for example, a vessel-type mixer having agitating blades such as turbine blades and comb blades. The rotating speed of the blades at this time is usually 50 to 400 rpm, preferably 100 to 200 rpm. The time required for contacting is usually 1 to 8 hours, preferably 2 to 5 hours. Examples of the ketone may be the same as those exemplified for the ketone used for the precipitation treatment. The copolymer which has been contacted with the ketone may be separated by separating means such as centrifugation or filtration. As required, the separated copolymer is further washed with the ketone. The washing conditions may be the same as the ketone contacting treatment conditions described above.

The random copolymer of this invention obtained by the above after treatment usually has a bulk density of 0.05 to 0.3, preferably 0.1 to 0.25, and is easy to handle at the time of molding. Furthermore, since the copolymer of this invention has low contents of the unreacted cycloolefin monomer and a low-molecular-weight polymer, optical materials, particularly optical memory discs, molded from it permit reduction of noise caused by, for example, diffused reflection.

Thus, the present invention gives a random copolymer in which the mole ratio of polymerized cycloolefin of formula (I) units to polymerized ethylene units is from 3:97 the 60:40, preferably from 10:90 to 60:40, more preferably from 15:85 to 50:50.

The random copolymer of this invention has an intrinsic viscosity [$\eta$], measured in decalin at 135°C, of 0.01 to 20 dl/g, preferably 0.05 to 10 dl/g.

The random copolymer of this invention has a molecular weight distribution ($\overline{M}w/\overline{M}n$), measured by gel permeation chromatography (GPC), of not more than 4, preferably not more than 3.5, especially preferably not more than 3. The random copolymer of this invention is characterized in that this molecular weight distribution is narrow. This means that the random copolymer of this invention has a low content of a low-molecular-weight polymer. Accordingly, when the random copolymer of this invention is molded into an optical material such as an optical memory disc or optical fibers, the optical material has good surface smoothness, low surface tack, or good mechanical properties and is suitable for optical applications.

The random copolymer of this invention has a crystallinity, measured by X-ray diffractometry, of 0 to 10%, preferably 0 to 8%, especially preferably 0 to 7%. The advantage of the copolymer having a crystallinity of 10% or below is that when it is molded into an optical material such as an optical memory disc or optical fibers, noise of the optical material caused by, for example, reaction or diffused reflection is reduced.

The random copolymer of this invention preferably has a glass transition temperature (Tg) of 10 to 130°C, more preferably 20 to 100°C.

The random copolymers of this invention are molded by known methods. For example, they can be extrusion-molded, injection-molded, blow-molded, or rotationally molded by using, for example, a vent-type extruder, a twin-screw extruder, a conical twin-screw extruder, a Cokneader, a plsticator, a mixtruder, a twin conical screw extruder, a planetary screw extruder, a gear-type extruder or a screwless extruder. In the molding process, known additives such as heat stabilizers, light stabilizers, antistatic agents, slip agents, antiblocking agents, antihaze agents, lubricants, inorganic and organic fillers, dyes and pigments may be used as required.

Phenolic or sulfur-type antioxidants may be cited as examples of such additives. The phenolic antioxidants include, for example, phenols such as 2,6-di-tert-butyl-p-cresol, stearyl (3,3,-dimethyl-4-hydroxybenzyl)thioqlycolate, stearyl beta-(4-hydroxy-3,5-di-tert-butylphenol)propionate, distearyl 3,5-di-tert-butyl-4-hydroxybenzyl phosphate, 2,4,6-tris (3',5'-di-tert-butyl-4'-hydroxybenzylthio)-1,3,5-triazine, distearyl (4-hydroxy-3-methyl-5-tert-butylbenzyl)malonate, 2,2'-methylenebis(4-methyl-6-tert-butylphenol), 4,4'-methylene-bis(2,6-di-tert-butylphenol), 2,2'-methylenebis[6-(1-methylcyclohexyl)p-cresol], bis[3,5-bis[4-hydroxy-3-tert-butylphenyl)butyric acid] glycol ester, 4,4'-butylidene-bis (6-tert-butyl-m-cresol), 1,1,3-tris(2-methyl-4-hydroxy-5-tert-butylphenyl)butene, bis[2-tert-butyl-4-methyl-6-(2-hydroxy-3-tert-butyl-5-methylbenzyl)phenyl] terephthalate, 1,3,5-tris(2,6-di-methyl-3-hydroxy-4-tert-butyl)benzyl isocyanurate, 1,3,5-tris(3,5-di-tert-butyl-4-hydroxybenzyl)-2,4,6-trimethylbenzene, tetrakis[methylene-3-(3,5-di-tert-butyl-4-hydroxyphenyl)propionate]-methane, 1,3,5-tris(3,5-di-tert-butyl-4-hydroxybenzyl) isocyanurate, 1,3,5-tris[(3,5-di-tert-butyl-4-hydroxyphenyl)propionyloxyethyl] isocyanurate, 2-octylthio-4,6-di(4-hydroxy-3,5-di-tert-butyl)phenoxy-1,3,5-triazine and 4,4'-thiobio(6-tert-butyl-m-cresol) and polyhydric phenol/carbonic acid oligoesters such as carbonic acid oligoesters (for example, having a degree of polymerization of 2, 3, 4, 5, 6, 7, 8, 9, 10) of 4,4'-butylidene-bis(2-tert-butyl-5-methylphenol).

Examples of the sulfur-type antioxidant include dialkyl thiodipropionates such as dilauryl, dimyristyl or distearyl thiodipropionate, and esters (such as pentaerythritol tetralaurylthiopropionate) formed between alkylthiopropionic acids such as butyl-, octyl-, lauryl- or stearylthiopropionic acid and polyhydric alcohols (such as glycerol, trimethylolethane, trimethylolpropane, pentaerythritol or tris-hydroxyethyl diisocyanurate).

Phosphorous-containing compounds may also be incorporated. Examples include trioctyl phosphite, tri-lauryl phosphite, tridecyl phosphite, octyldiphenyl phosphite, tris(2,4-di-tert-butylphenyl) phosphite, triphenyl phosphite, tris(butoxyethyl) phosphite, tris(nonylphenyl) phosphite, distearyl pentaerythritol diphosphite, tetra-(tridecyl)-1,1,3-trio (2-methyl-5-tert-butyl-4-hydroxyphenyl)butane diphosphite, tetra($C_{12}$-$C_{15}$ mixed alkyl)-4,4'-isopropylidenediphenyl diphosphite, tetra(tridecyl)-4,4'-butylidenebis(3-methyl-6-tert-butylphenol) diphosphite, tris(3,5-di-tert-butyl-4-hydroxyphenyl) phosphite, tris(mono-di-mixed nonylphenyl) phosphite, hydrogenated 4,4'-isopropylidene diphenol polyphosphite, bis(octylphenyl).bis[4,4'-butylidenebis(3-methyl-6-tert-butylphenol)].1,6-hexanediol diphosphite, phenyl-4,4'-isopropylidenediphenol-pentaerythritol diphosphite, bis(2,4-di-tert-butylphenyl)pentaerythritol diphosphite, bis(2,6-di-tert-butyl-4-methylphenyl)pentaerythritol diphosphite, tris[4,4'-isopropylidenebis(2-tert-butylphenol)] phosphite, phenyldiisodecyl phosphite, di(nonylphenyl)pentaerythritol diphosphite, tris(1,3-di-stearoyloxyisopropyl) phosphite, 4,4'-isopropylidenebis(2-tert-butylphenol)-di(nonylphenyl) phosphite, 9,10-dihydro-9-oxa-10-phosphaphenanthrene-10-oxide, and tetrakis(2,4-di-tert-butylphenyl)-4,4'-biphenylene diphosphonite.

There can also be used 6-hydroxycoumarone derivatives such as alpha-, beta-, gamma- and delta-tocopherols and mixtures thereof, a 2,5-dimethyl-substitution product, 2,5,8-trimethyl-substituted product or 2,5,7,8-tetramethyl-substituted product of 2-(4-methyl-pent-3-eny)-6-hydroxycoumarone, 2,2,7-trimethyl-5-tert-butyl-6-hydroxycoumarone, 2,2,5-trimethyl-7-tert-butyl-6-hydroxycoumarone, 2,2,5-trimethyl-6-tert-butyl-6-hydroxycoumarone, and 2,2-dimethyl-5-tert-butyl-6-hydroxycoumarone.

It is also possible to incorporate a compound represented by the general formula

$$M_xAl_y(OH)_{2x+3y-2z}(A)_z.aH_2O$$

wherein M represents Mg, Ca or Zn, A is an anion other than a hydroxyl anion, x, y and z are positive numbers, and a represents 0 or a positive number.

Examples of the compounds of the above formula are

$Mg_6Al_2(OH)_{16}CO_3\ 4H_2O$,
$Mg_8Al_2(OH)_{20}CO_3\ 5H_2O$,
$Mg_5Al_2(OH)_{14}CO_3\ 4H_2O$,
$Mg_{10}Al_2(OH)_{22}(CO_3)_2\ 4H_2O$,
$Mg_6Al_2(OH)_{16}HPO_4\ 4H_2O$,
$Ca_6Al_2(OH)_{16}CO_3\ 4H_2O$,
$Zn_6Al_2(OH)_{16}CO_3\ 4H_2O$,
$Zn_6Al_2(OH)_16SO_4\ 4H_2O$,
$Mg_6Al_2(OH)_{16}SO_4\ 4H_2O$, and
$Mg_6Al_2(OH)_{12}CO_3\ 3H_2O$.

There may also be added an antioxidant having a 2-benzofuranone skeleton, such as 3-phenyl-2-benzofuranone and 3-phenyl-4,6-di-t-butyl-2-benzofuranone as disclosed in the specification of Japanese Laid-Open Patent Publication No. 501,181/1980.

Examples of the light stabilizers include hydroxybenzophenones such as 2-hydroxy-4-methoxybenzophenone, 2-hydroxy-4-n-octoxybenzophenone, 2,2'-dihydroxy-4-methoxybenzophenone and 2,4-dihydroxybenzophenone; benzotriazoles such as 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-5'-methylphenyl)benzotriazole and 2-(2'-hydroxy-3',5'-di-tert-amylphenyl)benzotriazoles benzoates such as phenyl salicylate, p-tert-butylphenyl salicylate, 2,4-di-tert-butylphenyl-3,5-di-tert-butyl-4-hydroxybenzoate and hexadecyl-3,5-di-tert-butyl-4-hydroxybenzoate; nickel compounds such as 2,2'-thiobis (4-tert-octylphenol) nickel salt, [2,2'-thiobis(4-tert-octylphenolate)]-n-butylamine nickel salt and (3,5-di-tert-butyl-4-hydroxybenzyl)-phosphonic acid monoethyl ester nickel salt; substituted acryloniriles such as methyl alpha-cyano-beta-methyl-beta-(p-methoxyphenyl)acrylate; oxalic acid dianilides such as N'-2-ethylphenyl-N-ethoxy-5-tert-butylphenyl oxalic acid diamide and N-2-ethylphenyl-N'-2-ethoxyphenyl oxalic acid diamide; and hindered amine compounds such as bis(2,2,6,6-tetramethyl-4-piperidine)sebacate, poly[(6-(1,1,3,3-tetramethylbutyl)imino)-1,3,5-triazine-2,4-diyl 4-(2,2,6,6-tetramethylpiperidyl)imino)hexamethylene] and a condensation product of dimethyl succinate and 2-(4-hydroxy-2,2,6,6-tetramethyl-1-piperidyl)ethanol.

Examples of the lubricants include aliphatic hydrocarbons such as paraffin wax, polyethylene wax and polypropylene wax; higher fatty acids such as capric acid, lauric acid, myristic acid, palmitic acid, margaric acid, stearic acid, arachidic acid and behenic acid; metal salts of higher fatty acids such as lithium, calcium, sodium, magnesium and potassium salts of the above-exemplified fatty acids; aliphatic alcohols such as palmityl alcohol, cetyl alcohol and stearyl alcohol; aliphatic amides such as caproic amide, caprylic amide, capric amide, lauric amide, myristic amide, palmitic amide and stearic amide; esters formed between fatty acids and alcohols; and fluorine compounds such as fluoroalkylcarboxylic acids metal salts thereof, and metal salts of fluoroalkylsulfonic acids.

Examples of the fillers include inorganic or organic fibrous fillers such as glass fibers, silver- or aluminum-coated glass fibers, stainless steel fibers, aluminum fibers, potassium titanate fibers, carbon fibers, whiskers, Kevlar® fibers

and superhigh elastic polyethylene fibers; and inorganic or organic powdery, granular or flaky fillers such as talc, calcium carbonate, magnesium hydroxide, calcium oxide, magnesium sulfate, graphite, nickel powder, silver powder, copper powder, carbon black, silver-coated glass beads, aluminum-coated glass beads, aluminum flakes, stainless steel flakes and nickel-coated graphite.

The random copolymers of this invention have excellent transparency, heat resistance, heat aging resistance, chemical resistance, solvent resistance, dielectric properties and mechanical properties, a narrow and uniform molecular weight distribution, and a narrow and uniform composition distribution. Accordingly, those having a low molecular weight are synthetic waxes and are useful as candles, impregnating agents for matches, paper finishing agents, sizes, antioxidants for rubber, water-proofing agents for cardboards, slow releasing agents for chemical fertilizers, heat accumulators, binders for ceramics, paper condensers, electric insulating materials for electric wires and cables, agents for decelerating neutrons, fiber finishing aids, water-repellents for building materials, protecting agents for coatings, polishing agents, thixotropy imparting agents, core hardening agents for pencils and crayons, carbon ink substrates, electrophotographic toners, lubricants and releasing agents for molding of synthetic resins, resin coloring agents, hot-melt adhesives, and lubricant greases. Those having a high molecular weight can be used in an optical field as optical lenses, optical discs, optical fibers and windowpanes, in an electrical field as a water tank for electrical irons, parts of electronic ovens, base boards for liquid crystal display, base boards for printed circuit boards, high frequency circuit boards and transparent electrically conductive sheets or films, in medical and chemical fields as syringes, pipettes and animal gages, and in other various fields as housings of measuring instruments, and helmets.

When the copolymers of this invention have a glass transition temperature (Tg) below 100°C, they can be used in a field utilizing their shape memory, and as a vibration controlling material or a tube. Specifically, they can be used as joints for irregularly-shaped pipes, laminating agents for the interior and exterior parts of pipes and rods, clamping pins for optical fiber connectors, plaster casts, containers, automobile bumpers, various space eliminating materials, vibration controlling materials or sound insulating materials in the form of a laminate with a metal surface material, and tubes for use in medical therapy.

The random copolymers of this invention may be used as a blend with various known polymers. Examples of such known polymers are:

(A) Polymers derived from hydrocarbons having 1 or 2 unsaturated bonds

Polyolefins, such as polyethylene, polypropylene, polyisobutylene, poly(methylbutene-1), poly(4-methylpentene-1), poly(butene-1), polyisoprene, polybutadiene and polystyrene, or crosslinked products thereof.

Copolymers of the monomers constituting the above polymers with each other, such as ethylene/propylene copolymer, propylene/butene-1 copolymer, propylene/isobutylene copolymer, styrene/isobutylene copolymer, styrene/butadiene copolymer, terpolymers of ethylene, propylene and dienes such as hexadiene, bicyclopentadiene and 5-ethylidene-2-norbornene, and terpolymers.of ethylene, butene-1 and dienes such as hexadiene, dicyclopentadiene and 5-ethylidene-2-norborne.

Blends, grafted polymers, and block copolymers of these polymers may also be cited.

(B) Halogen-containing vinyl polymers

Polyvinyl chloride, polyvinylidene chloride, polyvinyl fluoride, polychloroprene, and chlorinated rubbers.

(C) Polymers derived from alpha,beta-unsaturated carboxylic acids or the derivatives thereof

Polyacrylate, polymethacrylate, polyacrylamide, and polyacrylonitrile.

Copolymers of the monomers constituting the above-exemplified polymers with other copolymerizable monomers, such as acrylonitrile/butadiene/styrene copolymer, acrylonitrile/styrene copolymer, and acrylonitrile/styrene/acrylate copolymer.

(D) Polymers derived from unsaturated alcohols, amines, acyl derivatives thereof, or acetals

Polyvinyl alcohol, polyvinyl acetate, polyvinyl stearate, polyvinyl benzoate, polyvinyl maleate, polyvinyl butyral, polyallyl phthalate and polyallylmelamine.

Copolymers of the monomers constituting the above-exemplified polymers with other copolymerizable monomers, such as ethylene/vinyl acetate copolymer.

(E) Polymers derived from epoxides

Polyethylene oxide and polymer derived from bisglycidyl ether.

(F) Polyacetals

Polyoxymethylene, polyoxyethylene, and polyoxymethylene containing ethylene oxide.

(G) Polyphenylene oxide

(H) polycarbonate

(I) Polysulfone

(J) Polyurethane and urea resins

(K) Polyamides and copolyamides derived from diamines and dicarboxylic acids and/or aminocarboxylic acids or the corresponding lactams

Nylon 6, nylon 66, nylon 11, and nylon 12.

(L) Polyamide-polyethers

(M) Polyesters derived from dicarboxylic acids and dialcohols and/or hydroxycarboxylic acids or the corresponding lactones

Polyethylene terephthalate, polybutylene terephthalate and poly(1,4-dimethylolcyclohexane terephthalate).

(N) Crosslinked polymers derived from aldehydes and phenols, urea or melamine

Phenol/formaldehyde resin, urea/formaldehyde resin, and melamine/formaldehyde resin.

(O) Alkyd resins

Glycerin/phthalic acid resin.

(P) Unsaturated polyester resins derived from copolyesters of saturated and unsaturated dicarboxylic acids and polyhydric alcohols using vinyl compounds as crosslinking agents, and halogen-containing modified resins thereof.

(Q) Natural polymers

Cellulose, rubber and protein, or derivatives thereof, such as cellulose acetate, cellulose propionate, cellulose acetate and cellulose ether.

When the copolymers of this invention are used as synthetic waxes, they may, of course, be mixed with various known waxes.

The random copolymers of this invention may be used as a blend with each other.

The random copolymer of this invention may be modified by grafting thereto a monomer selected from the group consisting of (a) alpha, beta-unsaturated carboxylic acids and/or their derivatives, (b) styrenes, (c) organic silicon compounds having an olefinic unsaturated bond and a hydrolyzable group and (d) unsaturated epoxy compounds. The modified random copolymer obtained has the same excellent properties as the random copolymer of the invention and also especially good adhesion to metals and synthetic resins and good compatibility with other resins. The amount of the grafting monomer in the modified random copolymer is 0.1 to 50 parts by weight, preferably 0.5 to 35% by weight, per 100 parts by weight of the random copolymer of the invention. The modified random copolymer usually has an intrinsic viscosity [η] of 0.03 to 20 dl/g, preferably 0.05 to 5 dl/g.

Examples of the grafting monomer are:

Examples of the unsaturared carboxylic acids and their derivatives (a) include unsaturated carboxylic acids such as acrylic acid, methacrylic acid, alpha-ethylacrylic acid, maleic acid, fumaric acid, itaconic acid, citraconic acid, tetrahydrophthalic acid, methyltetrahydrophthalic acid, endocis-bicyclo[2.2.1]-hept-5-ene-2,3-dicarboxylic acid (Nadic acid®), and methylendocis-bicyclo[2.2.1]-hept-5-ene-2,3-dicarboxylic acid (methylNadic acid®), and their halides, amides, imides, anhydrides and esters. Specific examples of these derivatives are malenyl chloride, maleimide, maleiuc anhydride, citraconic anhydride, monomethyl maleate and dimethyl maleate. Of these, the unsaturated dicarboxylic acids or their anhydrides are preferred. Maleic acid, Nadic acid or their anhydrides are especially preferred.

Examples of the styrenes (b) are compounds represented by the following formula

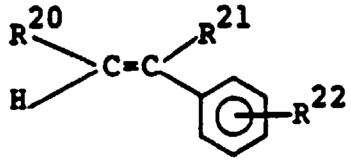

wherein $R^{20}$, $R^{21}$ and $R^{22}$ each represent a hydrogen atom or a lower alkyl group. Specific examples are styrene, alpha-methylstyrene, o-methylstyrene, m-methylstyrene, p-methylstyrene, m-ethylstyrene, p-ethylstyrene, o-isopropylsytrene, m-isopropylstyrene and p-isopropylstyrene. Of these, styrene, m-methylstyrene and p-methylstyrene are preferred.

Examples of the organic silicon compound (c) having an olefinic unsaturated bond and a hydrolyzable group are compounds represented by the following formula

$$R^{23}R^{24}SiY^1Y^2$$

wherein $R^{23}$ and $R^{24}$ are identical or different and each represents a monovalent group composed of carbon, hydrogen and optionally oxygen and having an olefinically unsaturated bond, and $Y^1$ and $Y^2$ are identical or different and each represents a hydrolyzable group, compounds of the following formula

$$R^{23}SiY^1Y^2Y^3$$

wherein $R^{23}$ is as defined, and $Y^1$, $Y^2$ and $Y^3$ are identical and different and each represents a hydrolyzable group, and compounds of the following formula

$$R^{23}XSiY^1Y^2$$

wherein $R^{23}$, $Y^1$ and $Y^2$ are as defined above, and X represents an organic group free from an olefinic unsaturated bond.

Examples of $R^{23}$ and $R^{24}$ are vinyl allyl, butenyl, cyclohexenyl, cyclopentadienyl, $CH_2$=C($CH_3$)-COOO($CH_2$)$_3$-, $CH_2$=C($CH_3$)COO($CH_2$)$_2$-O-($CH_2$)$_3$-, and $CH_2$=C($CH_3$)COO$CH_2$O$CH_2$CH(OH)$CH_2$O($CH_2$)$_3$-. Of these, the hydrocarbon groups having a terminal olefinically unsaturated bond and esters thereof are preferred. The vinyl group is especially preferred.

Examples of $Y^1$, $Y^2$ and $Y^3$ are alkoxy groups such as methoxy, ethoxy, butoxy and methoxyethoxy, acyloxy groups such as formyloxy, acetoxy and propionoxy, oxime groups such as -ON=C($CH_3$)$_2$, -ON=CH$CH_2C_2H_5$ and -ON=C($C_6H_5$)$_2$, and substituted amino groups and arylamino groups such as -NH$CH_3$, -NH$C_2H_3$ and -NH($C_6H_3$).

Examples of X in the above formula include methyl, ethyl, propyl, tetradecyl, octadecyl, phenyl, benzyl and tolyl. Of these, monovalent hydrocarbon groups are preferred.

Organic silicon compounds preferably used in this invention are those of the second formula given above, particularly those in which the groups $Y^1$, $Y^2$ and $Y^3$ are identical. Especially preferred are vinyltrialkoxysilanes such as vinyltrimethoxysilane, vinyltriethoxysilane, vinyltris(methoxyethoxy)silane, vinylmethyldiethoxysilane and vinylphenyldimethoxysilane.

The unsaturated epoxy monomers (d) are preferably monomers having at least one polymerizable unsaturated bond and at least one epoxy group per molecule. Examples include unsaturated glycidyl esters represented by the following general formula

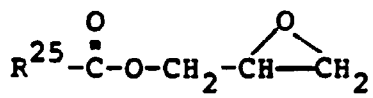

wherein $R^{25}$ represents a hydrocarbon group having a polymerizable ethylenically unsaturated bond, unsaturated glycidyl ethers represented by the general formula

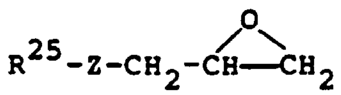

wherein $R^{25}$ is as defined above, and Z represents a divalent group of the formula -$CH_2$-O- or

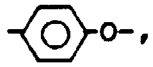

and epoxyalkenes represented by he general formula

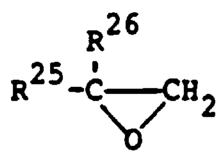

wherein $R^{25}$ is as defined, and $R^{26}$ represents a hydrogen atom or a methyl group.

Specific examples of the monomers (d) are glycidyl acrylate, glycidyl methacrylate, mono- and di-glycidyl itaconate, mono-, di- and-triglycidyl butene-tricarboxylates, mono- and di-glycidyl citraconates, mono- and di-glycidyl endo-cis-bicyclo[2.2.1]-hept-5-ene-2,3-carboxylates, mono- and di-glycidyl endo-cis-bicyclo-[2.2.1]-hept-5-ene-2-methyl-2,3-dicarboxylates, mono- and di-glycidyl allylsuccinates, glycidyl p-styrene-carboxylate, allyl glycidyl ether, 2-methylalkyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene, and vinylcyclohexene monoxide. Of these, glycidyl acrylate and glycidyl methacrylate are preferred.

The modified random copolymer may be produced by various known methods. For example, the random copolymer is melted, and the grafting monomer is added and graft-copolymerized. Alternatively, the random copolymer is dissolved in a solvent, and the grafting monomer is added and graft-copolymerized. In either case, the reaction is preferably carried out in the presence of a radical initiator in order to perform graft copolymerization efficiently. The radical initiator may include organic peroxides, organic peresters and azo compounds. Ionizing radiations and ultraviolet light may also be used to generate radicals.

The modified random copolymer obtained by the above procedure has excellent heat resistance as shown by its high glass transition temperature which is one measure of heat resistance. Specifically, the modified random copolymer usually has a glass transition temperature, measured by a Dynamic Mechanical Analyzer (DMA), of 20 to 250°C, in many cases 30 to 220°C. The modified random copolymer also usally has a softening temperature of 20 to 230°C, in

many cases 30 to 200°C. The softening termperature is defined as the temperature at which a quartz needle (diameter 0.635 mm) penetrates 0.1 mm into the copolymer under a load of 49 g when the temperature is elevated at a rate of 5°C/min. using TMS (thermomechanical analyzer, a product of E. I. du Pont de Nemours & Co.).

The modified copolymer usually has a density, determined by the method of ASTM D 1505, of 0.95 to 1.20 g/cm$^3$, in many cases 0.96 to 1.10 g/cm$^3$.

When the random copolymer of this invention is crosslinked with sulfur or organic peroxides or by actinic light such as electron beams or radioactive rays, its heat resistance, chemical resistance, solvent resistance and mechanical properties can be further improved.

The properties of the cycloolefin random copolymers obtained in this invention were measured in accordance with the following method.

(1) Copolymer composition (mole%)

On the basis of the cycloolefin unit content of the random copolymer determined by $^{13}$C-NMR (200 MHz), a calibration curve is prepared between the cycloolefin unit content and the height of the peak of an absorption band based on the cycloolefin unit determined by infrared spectroscopy. The peak height of the absorption band of the infrared absorption spectrum of the random copolymer is measured, and the cycloolefin unit content is calculated. The ethylene unit content of the random copolymer is calculated by subtracting the cycloolefin unit content from the entire units.

(2) Intrinsic viscosity [η]

Measured at 135°C using a Ubbelohde viscometer.

(3) Glass transition temperature (Tg)

Measured by a Dynamic Mechanical Analyzer (DMA, made by E. I. du Pont de Nemours & Co.).

(4) Crystallinity

Determined by X-ray diffractometry.

(5) Volatile component (VM)

A weight change was measured under the conditions of 300°C, 1 torr and 1 hour.

(6) Content of the unreacted cycloolefin

The polymer was dissolved in cyclohexane, and the amount of the unreacted cycloolefin was measured by gas chromatography.

(7) Molecular weight distribution

The molecular weight distribution ($\bar{M}w/\bar{M}n$) is determined in the following manner in accordance with the procedure described at pages 14-114 of "Gel Permeation chromatography" by Takeuchi, published on May 20, 1976 by Maruzen Co., Ltd., Tokyo.

(1) Using standard polystyrene of a known molecular-weight (mono-dispersed polystyrene, a product of Toyo Soda Mfg. Co., Ltd., Japan), the molecular weight M of the polystyrene sample and its GPC (gel permeation chromatography) count are measured. A calibration curve for the molecular weight M and the EV (elution volume) is drawn. The concentration of the polymer at this time is set at 0.02% by weight.

(2) A gel permeation chromatogram of the sample is taken by the GPC measuring method, and the number average molecular weight ($Mn = \frac{\Sigma MiNi}{\Sigma Ni}$) and the weight average molecular weight ($Mw = \frac{\Sigma Mi^2Ni}{\Sigma MiNi}$) are calculated for copolymer by (1) above, and the value ($\bar{M}w/\bar{M}n$) is determined.

The sample is prepared under the following conditions, and the conditions for GPC are as shown below.

Preparation of the sample

(a) The sample is taken into an Erlenmeyer flask together with o-dichlorobenzene so as to provide a 0.02% solution.

(b) Into the Erlenmeyer flask containing the sample is added 0.1% by weight, based on the polymer solution, of 2,6-di-tert.-butyl-p-cresol as an antioxidant.

(c) The Erlenmeyer is heated to 140°C, and the contents are stirred for about 30 minutes to dissolve the polymer and the antioxidant.

(d) Then, at 135 to 140°C, the solution is filtered by a 1η Millipoere filter.

(e) The filtrate is subjected to gel permeation chromatography.

Conditions for gel permeation chromatography

(a) Device: Model 150C, made by Waters Company

(b) Column: TSK-GMH6 (mix type) made by Toyo Soda Mfg. Co., Ltd.
(c) Amount of the sample: 500 μl
(d) Temperature: 140°C
(e) Flow rate: 1 ml/min.
(f) Total theoretical stages of the column;1 x $10^4$ to 4 x $10^4$ (measured with acetone)

The following Examples further illustrate the present invention.

EXAMPLE I

Using a 2-liter polymerization reactor equipped with agitating blades, ethylene and 6-ethylbicyclo[2.2.1]-hept-2-ene ((f) of Table I ; abbreviated as MBH) were continuously copolymerized.

Specifically, the reactor was continuously charged at its top with 0.9 liter/hr of a toluene solution of MBH so as to provide an MBH concentration in the reactor of 60 g/liter, 0.7 liter/hr of a toluene solution of $VO(OC_2H_5)Cl_2$ so as to provide a vanadium concentration in the reactor of 1 mmole/liter (at this time, the concentration of vanadium fed was 2.86 times its concentration in the reactor), and a cyclohexane solution of ethyl aluminum sesquichloride as a catalyst to provide an aluminum concentration in the reactor of 4 mmoles/liter. In the meantime, the polymer solution was continuously withdrawn from the bottom of the reactor so that the amount of the polymer solution in the reactor was always maintained at 1 liter. Furthermore, from the top of the reactor, 40 liters/hr of ethylene and 80 liters/hr of nitrogen were fed. The copolymerization was carried out at 10°C by circulating a cooling medium through a jacket fitted to the outside of the reactor. As a result of performing the copolymerization reaction under the above conditions, a polymerization reaction mixture containing an ethylene/MBH random copolymer was obtained. A small amount of methanol was added to the polymer solution withdrawn from the bottom of the reactor to stop the polymerization. The polymer solution was put into a large amount of acetone/methanol to precipitate the resulting copolymer. The copolymer was fully washed with acetone, and dried under reduced pressure at 80°C for one day. By the above operation, the ethylene/MBH random copolymer was obtained at a rate of 50 g/hr.

The copolymer had an ethylene content of 62 mole%, an intrinsic viscosity, measured in decalin at 135°C, of 1.79, an iodine number of 0.9, a crystallinity, determined by X-ray diffractometry, of 0%, a transparency, determined by a haze metes on a 1 mm sheet sample in accordance with ASTM D1003-52, of 3.4%, and a glass transition temperature (Tg) of 100°C. The melting point Tm of the copolymer was measured within a temperature range of -120 to 400°C by DSC(Du Pont 990 type) at a temperature elevation rate of 10°C/min, but no melting curve (peak) was observed.

EXAMPLES 2-8 AND COMPARATIVE EXAMPLES 1&2

Example 1 was repeated except that the copolymerization conditions shown in Table 2 were used. The properties of the resulting copolymers are shown in Table 3.

COMPARATIVE EXAMPLE 3

A fully agitated 500 ml separable flask was fitted with agitating vanes, a gas blowing tube, a thermometer and a dropping funnel, and fully purged with nitrogen. Toluene (250 ml) dehydrated and dried by molecular sieves was put into the flask. Under a nitrogen stream, the flask was charged with 7.5 g of a cycloolefin (f) in Table 1 and 1 mmole of ethyl aluminum sesquichloride , and 0.25 millimole of $VO(OC_2H_5)Cl_2$ was added to the dropping funnel.

A gaseous mixture composed of 10 liters/hr of ethylene and 40 liters/hr of nitrogen was passed via the gas blowing tube through the flask kept at 10°C for 10 minutes. $VO(OC_2H)Cl_2$ was added dropwise from the dropping funnel, and the copolymerization was started. While the gaseous mixture was passed, the copolymerization reaction was carried out batchwise at 10°C for 30 minutes. Methanol (5 ml) was then added to the polymer solution to stop the copolymerization reaction. The polymer solution was then put into a large amount of methanol/acetone to precipitate the copolymer. The copolymer was washed with acetone, and dried under reduced pressure at 80°C for one day. By the above operation, 5.4 g of copolymer was obtained. The properties of the copolymers were measured as in Example 1, and the results are shown in Table 4.

COMPARATIVE EXAMPLES 4-8

Comparative Example 3 was repeated except that the copolymerization conditions shown in Table 4 were used. The properties of the resulting copolymers are shown in Table 4.

## Table 1

| | Cycloolefin | |
|---|---|---|
| (a) | 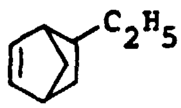 | 6-ethylbicyclo[2,2,1]hept-2-ene |
| (b) | 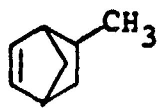 | 6-methylbicyclo[2,2,1]hept-2-ene |
| (c) | 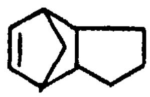 | tricyclo[4,3,0,$1^{2,5}$]-3-decene |
| (d) | 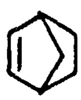 | bicyclo[2,2,1]hept-3-ene |

Table 2

| Example | Cycloolefin | | Catalyst | | | | |
|---|---|---|---|---|---|---|---|
| | | | Vanadium compound | | | Aluminum compound | |
| | Name | Concentration in the reactor (g/ℓ) | Name | Concentration in the reactor (mmol/ℓ) | Ratio of the concentration of V fed to that of V in the reactor | Name | Concentration in the reactor (mmol/ℓ) |
| 1 | Table 1 (a) | 60 | $VO(OC_2H_5)Cl_2$ | 1 | 2.86 | $Al(C_2H_5)_{1.5}Cl_{1.5}$ | 4 |
| 2 | " | " | " | " | " | " | " |
| 3 | " | " | " | " | " | " | " |
| 4 | " | " | $VOCl_3$ | " | " | " | 8 |
| 5 | (b) | " | $VO(OC_2H_5)Cl_2$ | " | 4.5 *1) | " | 4 |
| 6 | (c) | 30 | " | " | 2.86 | " | " |
| 7 | (d) | 60 | " | " | " | | " |
| 8 | (a) | " | " | " | 7 *2) | " | 10 |
| Comp. Ex. 1 | " | " | " | " | 13 *3) | " | 8 |
| Comp. Ex. 2 | " | 20 | " | " | 2.86 | " | 4 |

*1) 0.44 ℓ/hr of toluene solution of the vanadium compound and 1.16 ℓ/hr of toluene solution of the cycloolefin.

*2) 0.29 ℓ/hr of toluene solution of the vanadium compound and 1.31 ℓ/hr of toluene solution of the cycloolefin.

*3) 0.15 ℓ/hr of toluene solution of the vanadium compound and 1.45 ℓ/hr of toluene solution of the cycloolefin.

Table 2 (continued)

| Example | Amount of ethylene fed (ℓ/hr) | Polymerization temperature (°C) | Amount of the copolymer yielded (g/hr) |
|---|---|---|---|
| 1 | 40 | 10 | 50 |
| 2 | 80 | " | 80 |
| 3 | 50 | 30 | 64 |
| 4 | 80 | 10 | 84 |
| 5 | 40 | " | 48 |
| 6 | " | " | 50 |
| 7 | " | " | 52 |
| 8 | " | " | 48 |
| Comp. Ex.1 | " | " | 58 |
| Comp. Ex.2 | 80 | 30 | 74 |

Table 3

| Example | Properties of the copolymer | | | | | | | |
|---|---|---|---|---|---|---|---|---|
| | Ethylene content (mole%) | [η] | Iodine value | Crystallinity (%) | Haze (%) | DMA-Tg (°C) | DSC-Tm (°C) | $\bar{M}w/\bar{M}n$ |
| 1 | 62 | 1.79 | 0.9 | 0 | 3.4 | 100 | - | 2.5 |
| 2 | 70 | 2.18 | 1.0 | 0 | 3.5 | 73 | - | 2.7 |
| 3 | 84 | 2.74 | 0.8 | 0 | 5.5 | 30 | - | 3.0 |
| 4 | 71 | 2.20 | 0.9 | 0 | 3.4 | 74 | - | 2.6 |
| 5 | 63 | 1.92 | 0.8 | 0 | 5.7 | 99 | - | 3.3 |
| 6 | 62 | 1.82 | 1.0 | 0 | 4.2 | 98 | - | 2.5 |
| 7 | 64 | 1.75 | 0.9 | 0 | 3.9 | 99 | - | 2.3 |
| 8 | 68 | 1.82 | 1.0 | 0 | 11.6 | 92 | - | 3.8 |
| Comp. Ex.1 | 64 | 2.12 | 0.9 | 2 | 18.4 | 97 | 74 | 5.2 |
| Comp. Ex.2 | 92 | 3.52 | 0.8 | 3 | 13.2 | -5 | 112 | 3.2 |

**Table 4**

| Comparative Example | Cycloolefin | | Catalyst | | | |
|---|---|---|---|---|---|---|
| | | | Vanadium compound | | Aluminum compound | |
| | Name | Amount (g) | Name | Amount (g) | Name | Amount (g) |
| 3 | Table 1 (a) | 7.5 | $VO(OC_2H_5)Cl_2$ | 0.25 | $Al(C_2H_5)_{1.5}Cl_{1.5}$ | 2.5 |
| 4 | " | " | " | " | " | " |
| 5 | " | 2.5 | " | " | " | " |
| 6 | (b) | 7.5 | " | " | " | " |
| 7 | (c) | " | " | " | " | " |
| 8 | (d) | " | " | 0.125 | " | 1.25 |

**Table 4-b (continued)**

| Comparative Example | Ethylene content (ℓ/hr) | Polymerization temperature (°C) | Amount of the copolymer yielded (g) | Properties of the copolymer | | | | | | | |
|---|---|---|---|---|---|---|---|---|---|---|---|
| | | | | Ethylene content (mole%) | [η] | Iodine value | Crystallinity (%) | Haze (%) | DMA-Tg (°C) | DSC-Tm (°C) | $\bar{M}w/\bar{M}n$ |
| 3 | 10 | 10 | 5.4 | 64.1 | 4.98 | 0.9 | 0 | 10.2 | 88 | - | 9.4 |
| 4 | 30 | ″ | 9.3 | 73.2 | 5.08 | 0.8 | 0 | 18.2 | 68 | - | 8.3 |
| 5 | 50 | 30 | 9.4 | 93.6 | 4.32 | 1.0 | 17 | 58.7 | -10 | 121 | 11.2 |
| 6 | 10 | 10 | 4.9 | 56.0 | 5.12 | 0.9 | 0 | 9.4 | 111 | - | 7.6 |
| 7 | ″ | ″ | 6.8 | 54.3 | 4.02 | 0.8 | 0 | 14.3 | 116 | - | 8.2 |
| 8 | ″ | ″ | 4.5 | 64.3 | 2.78 | 1.0 | 3 | 11.5 | 92 | 75 | 5.7 |

EXAMPLE 9

Fifty grams of the random copolymer obtained in Example 1 was dissolved in 500 ml of xylene at 125°C in a nitrogen atmosphere in a glass reactor. Then, a xylene solution of maleic anhydride (abbreviafted as MAH) (12 g/30 ml) and a xylene solution of dicumyl peroxide (abbreviated as DCP) (0.27 g/30 ml) were fed gradually over a period of 4 hours from separate lines into the reactor.

Since MAH had low solubilty in xylene, it was dissolved by heating with an infrared lamp, and the heating was continued until its feeding was terminated.

After the feeding, the reaction was continued for 2 hours, and after the reaction, the reaction solution was cooled to room temperature. The reaction solution was put into a large amount of acetone to precipitate the polymer. The resulting grafted copolymer was filtered, repeatedly washed with acetone, and dried under reduced pressure at 80°C for 1 day to give the desired MAH-grafted copolymer. The amount of MAH grafted, measured by oxygen analysis of the modified copolymer was 1.27% by weight. The modified copolymer had an intrinsic viscosity, measured in decalin at 135°C, of 1.83 dl/g, a density, determined in accordance with ASTM D 1505, of 0.978 g/cm$^3$ and a glass transition temperature (Tg) measured by the DMA method of 102°C.

**Claims**

**1.** A random copolymer characterised in that

(A) the copolymer comprises polymerized units of ethylene and polymerized units of at least one cycloolefin represented by the following formula (I)

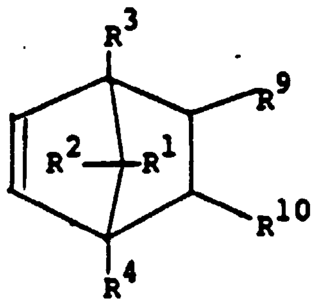

(I)

wherein $R^1$, $R^2$, $R^3$ and $R^4$ are identical or different and each represents a hydrogen atom, halogen atom or a hydrocarbon group having 1 to 10 carbon atoms, and $R^9$ and $R^{10}$ are identical or different and each represents a hydrogen atom, a halogen atom or a hydrocarbon group having 1 to 10 carbon atoms or $R^9$ and $R^{10}$ are bonded to each other to form a group of the following formula

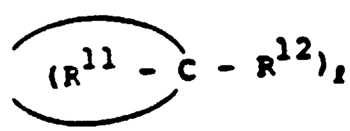

in which $R^{11}$ and $R^{12}$ are identical or different and each represents a hydrogen atom, a halogen atom or a hydrocarbon group having 1 to 10 carbon atoms, and $\ell$ is an integer of 3 or 4,

(B) the mole ratio of the polymerized cycloolefin units to the polymerized ethylene units is from 3:97 to 60:40,

(C) the or each cycloolefin of formula (I) is incorporated in the polymer chain as polymerized units represented by the following formula (II)

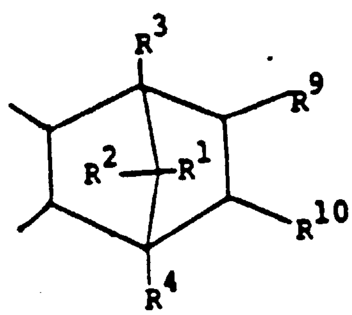

(II)

wherein all symbols are as defined above,

(D) the copolymer has an intrinsic viscosity [η], measured in decalin at 135°C, of 0.01 to 20 dl/g,

(E) the copolymer has a molecular weight distribution ($\overline{M}w/\overline{M}n$), measured by gel permeation chromatography, of not more than 4, and

(F) the copolymer has a crystallinity, measured by X-ray diffractometry, of 0 to 10%.

**2.** A random copolymer according to claim 1 wherein the mole ratio (B) of the polymerized cycloolefin units to the polymerized ethylene units is from 10:90 to 60:40.

**3.** A random copolymer according to claim 1 or 2 which has a glass transition temperature (Tg) of 10 to 130°C as measured by a Dynamic Mechanical Analyzer.

**4.** A process for producing a random copolymer as defined in any one of the preceding claims, which process comprises continuously copolymerizing ethylene with the or each cycloolefin represented by formula (I) in a hydrocarbon medium in the presence of a catalyst formed from a vanadium compound soluble in the hydrocarbon medium and an organo-aluminum compound while maintaining the atomic ratio of aluminum atoms to vanadium atoms in the reaction system, Al:V, at 2 or more:1.

**5.** A process according to claim 4 wherein the soluble vanadium compound is added to the reaction system in a concentration not more than 10 times its existing concentration in the reaction system in order to maintain the atomic ratio Al:V at 2 or more:1.

**6.** A process for preparing a modified random copolymer, which process comprises grafting on to a random copolymer, as defined in any one of claims 1 to 4, 0.1 to 50 parts by weight of a monomer selected from (a) alpha, beta-unsaturated carboxylic acids and/or their derivatives, (b) styrenes, (c) organic silicon compounds having an olefinically unsaturated bond and a hydrolyzable group, and (d) unsaturated epoxy monomers per 100 parts by weight of the said random copolymer.

**7.** Molded articles prepared from a random copolymer as defined in any one of claims 1 to 4 or from a modified random copolymer prepared by a process as claimed in claim 6.

**8.** A modified random copolymer which is obtainable by a process as defined in claim 6.

**Patentansprüche**

**1.** Statistisches Copolymer, **dadurch gekennzeichnet**, daß

(A) das Copolymer polymerisierte Einheiten von Ethylen und polymerisierte Einheiten von mindestens einem Cycloolefin der folgenden Formel (I) beinhaltet

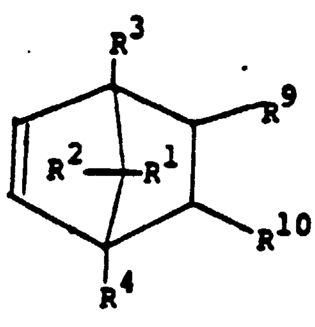

(I)

worin $R^1$, $R^2$, $R^3$ und $R^4$ gleich oder unterschiedlich sind und jeweils ein Wasserstoffatom, Halogenatom oder eine Kohlenwasserstoffgruppe mit 1 bis 10 Kohlenstoffatomen bedeuten und $R^9$ und $R^{10}$ gleich oder unterschiedlich sind und jeweils ein Wasserstoffatom, ein Halogenatom oder eine Kohlenwasserstoffgruppe mit 1 bis 10 Kohlenstoffatomen bedeuten, oder $R^9$ und $R^{10}$ miteinander unter Bildung der Gruppe der folgenden Formel

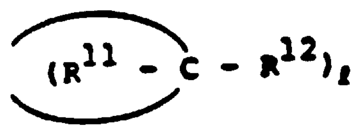

verbunden sind, worin $R^{11}$ und $R^{12}$ gleich oder unterschiedlich sind und jeweils ein Wasserstoffatom, ein Halogenatom oder eine Kohlenwasserstoffgruppe mit 1 bis 10 Kohlenstoffatomen bedeuten und $\ell$ eine ganze Zahl von 3 oder 4 ist,

(B) wobei das Molverhältnis der polymerisierten Cycloolefineinheiten zu den polymerisierten Ethyleneinheiten 3:97 bis 60:40 beträgt,

(C) das oder jedes Cycloolefin der Formel (I) in der Polymerkette als polymerisierte Einheiten eingebaut sind, repräsentiert durch die folgende Formel (II)

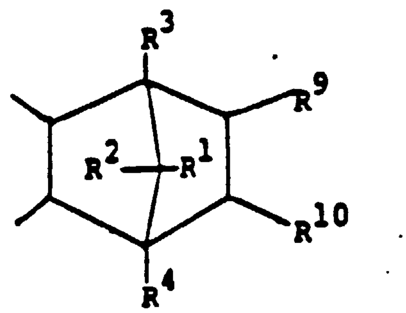

(II)

worin alle Symbole die obenstehende Bedeutung besitzen,

(D) das Copolymer eine Grenzviskosität [$\eta$], gemessen in Decalin bei 135°C, von 0,01 bis 20 dl/g besitzt,

(E) das Copolymer eine Molekulargewichtsverteilung ($\overline{M}w/\overline{M}n$), gemessen mittels Gelpermeationschromatographie, von nicht mehr als 4 besitzt, und

(F) das Copolymer eine Kristallinität, gemessen mittels Röntgenstrahldifftaktometrie, von 0 bis 10% besitzt.

**2.** Statistisches Copolymer gemäß Anspruch 1, worin das Molverhältnis (B) der polymerisierten Cycloolefineinheiten zu den polymerisierten Ethyleneinheiten 10:90 bis 60:40 beträgt.

**3.** Statistisches Copolymer gemäß Anspruch 1 oder 2, welches eine Glasübergangstemperatur (Tg) von 10 bis 130°C besitzt, bestimmt mittels eines dynamisch-mechanischen Analysators.

**4.** Verfahren zur Herstellung eines statistischen Copolymeren, wie es nach einem der vorhergehenden Ansprüche definiert ist, wobei das Verfahren das kontinuierliche Copolymerisieren von Ethylen mit dem oder jedem Cycloolefin der Formel (I) in einem Kohlenwasserstoffinedium in Gegenwart eines aus einer in dem Kohlenwasserstoffinedium löslichen Vanadiumverbindung und einer Organoaluminiumverbindung gebildeten Katalysators, wobei das Atomverhältnis von Aluminiumatomen zu Vanadiumatomen im Reaktionssystem, Al:V, 2 oder mehr: 1 beträgt, umfaßt.

**5.** Verfahren gemäß Anspruch 4, wobei die lösliche Vanadiumverbindung dem Reaktionssystem in einer Konzentration von nicht mehr als dem 10fachen seiner vorliegenden Konzentration im Reaktionssystem zugegeben wird, um das Atomverhältnis Al:V bei 2 oder mehr: 1 zu halten.

**6.** Verfahren zur Herstellung eines modifizierten statistischen Copolymeren, wobei das Verfahren das Aufpfropfen von 0,1 bis 50 Gew.-Teilen eines Monomeren, das aus (a) $\alpha,\beta$-ungesättigten Carbonsäuren und/oder deren Derivaten, (b) Styrolen, (c) organischen Siliciumverbindungen mit einer olefinisch ungesättigten Bindung und einer hydrolysierbaren Gruppe und (d) ungesättigten Epoxymonomeren gewält wird, auf ein statistisches Copolymer, wie es in jedwedem der Ansprüche 1 bis 4 definiert ist, pro 100 Gew.-Teile des statistischen Copolymeren umfaßt.

**7.** Geformte Artikel, hergestellt aus einem statistischen Copolymer nach einem der Ansprüche 1 bis 4 oder aus einem

modifizierten statistischen Copolymer, das mittels eines in Anspruch 6 beanspruchten Verfahrens hergestellt wird.

8. Modifiziertes statistisches Copolymer, welches mittels eines Verfahrens, wie es in Anspruch 6 definiert ist, erhältlich ist.

**Revendications**

1. Copolymère statistique caractérisé en ce que

(A) le copolymère comporte des motifs polymérisés dérivés d'éthylène et des motifs polymérisés dérivés d'au moins une cyclooléfine représentée par la formule suivante (I)

(I) 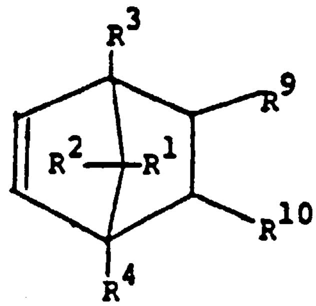

dans laquelle $R^1$, $R^2$, $R^3$ et $R^4$, identiques ou différents, représentent chacun un atome d'hydrogène, un atome d'halogène ou un groupe hydrocarboné comportant de 1 à 10 atomes de carbone, et $R^9$ et $R^{10}$, identiques ou différents, représentent chacun un atome d'hydrogène, un atome d'halogène ou un groupe hydrocarboné comportant de 1 à 10 atomes de carbone ou $R^9$ et $R^{10}$ sont liés l'un à l'autre pour former un groupe de formule

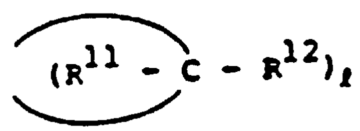

dans laquelle $R^{11}$ et $R^{12}$, identiques ou différents, représentent chacun un atome d'hydrogène, un atome d'halogène ou un groupe hydrocarboné comportant de 1 à 10 atomes de carbone, et 1 est un nombre entier égal à 3 ou 4,

(B) le rapport molaire des motifs polymérisés dérivés d'une cyclooléfine aux motifs polymérisés dérivés d'éthylène est compris entre 3/97 et 60/40,

(C) la cyclooléfine ou chaque cyclooléfine de formule (I) est incorporée dans la chaîne du polymère sous forme de motifs polymérisés représentés par la formule suivante (II)

(II) 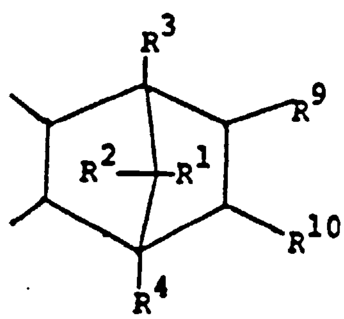

dans laquelle tous les symboles sont définis ci-dessus,

(D) le copolymère a une viscosité intrinsèque [η] mesurée dans la Décaline® à 135 °C, comprise entre 0,01 et 20 dl/g,

(E) le copolymère a un indice de polydispersité ($M_p/M_n$), mesuré par chromatographie par perméation de gel, ne dépassant pas 4, et

(F) le copolymère a un taux de cristallinité, mesuré par diffraction de rayons X, compris entre 0 et 10 %.

2. Copolymère statistique conforme à la revendication 1 dans lequel le rapport molaire (B) des motifs polymérisés

dérivés d'une cyclooléfine aux motifs polymérisés dérivés d'éthylène est compris entre 10/90 et 60/40.

3. Copolymère statistique conforme à la revendication 1 ou 2 ayant une température de transition vitreuse ($T_V$), déterminée au moyen d'un appareil de mesure mécaniquo-dynamique, comprise entre 10 et 130 °C.

4. Procédé de préparation d'un copolymère statistique conforme à une quelconque des revendications précédentes, lequel procédé comprend la copolymérisation en continu d'éthylène et de la ou de chaque cyclooléfine représentée par la formule (I), dans un milieu hydrocarboné en présence d'un catalyseur formé à partir d'un composé de vanadium soluble dans le milieu hydrocarboné et d'un composé organo-aluminique, avec maintient du rapport des atomes d'aluminium aux atomes de vanadium (Al/V) dans le système réactionnel à une valeur supérieure ou égale à 2/1.

5. Procédé conforme à la revendication 4 dans lequel on ajoute au système réactionnel le composé de vanadium soluble en une concentration n'excédant pas 10 fois sa concentration existant dans le système réactionnel afin de maintenir un rapport atomique Al/V supérieur ou égal à 2/1.

6. Procédé de préparation d'un copolymère statistique modifié, lequel procédé comprend le greffage de 0,1 à 50 parties en poids, par rapport à 100 parties en poids dudit copolymère statistique, d'un monomère choisi parmi (a) les acides carboxyliques $\alpha,\beta$-insaturés et/ou leurs dérivés, (b) les styrènes, (c) les composés organiques du silicium comportant une liaison à insaturation éthylénique et un groupe hydrolysable, et (d) des monomères insaturés à fonction époxyde, sur un copolymère statistique défini par une quelconque des revendications 1 à 4.

7. Articles moulés préparés à partir d'un copolymère statistique conforme à une quelconque des revendications 1 à 4 ou à partir d'un copolymère statistique modifié préparé selon un procédé conforme à la revendication 6.

8. Copolymère statistique modifié pouvant être obtenu selon un procédé conforme à la revendication 6.